# EUROPEAN PATENT SPECIFICATION

(11) **EP 1 590 842 B1**
(45) Date of publication and mention of the grant of the patent: **21.05.2014**
(21) Application number: 04708008.0
(22) Date of filing: 04.02.2004
(51) Int. Cl.: C01B 25/45, H01M 4/04, H01M 4/136, H01M 4/58, H01M 4/62

(54) **METHOD FOR SYNTHESIZING A CATHODIC MATERIAL BASED ON LITHIUM IRONPHOSPHATE, INTRINSICALLY CONTAINING CARBON**
VERFAHREN ZUR HERSTELLUNG VON KATHODENMATERIAL AUF DER BASIS VON LITHIUMPHEISENPHOSPHAT, INTRINSISCH KOHLENSTOFF ENTHALTEND
PROCEDE DE SYNTHESE D'UN MATERIAU CATHODIQUE A BASE DE PHOSPHATE DE LITHIUM METALLIQUE, CONTENANT INTRINSEQUEMENT DU CARBONE

(30) Priority: 06.02.2003 IT RM20030048
(43) Date of publication of application: 02.11.2005
(73) Proprietor: ENEA - ENTE PER LE NUOVE TECNOLOGIE, L'ENERGIA E L'AMBIENTE, 00196 Roma (IT); UNIVERSITA' DEGLI STUDI DI ROMA "LA SAPIENZA", 00185 Roma (IT); CNR Consiglio Nazionale Delle Ricerche, 00185 Roma (IT)
(72) Inventor: BELLITTO, Carlo, I-00015 Monterotondo (IT); PROSINI, Pier, Paolo, I-00181 Roma (IT); BAUER, Elvira, Maria, I-00055 Ladispoli (IT); PASQUALI, Mauro, I-01032 Caprarola (IT); RIGHINI, Guido, I-00189 Roma (IT)
(74) Representative: Sarpi, Maurizio
(86) International application number: PCT/IT2004/000038
(87) International publication number: WO 2004/070862

(56) References cited:
- WO-A-02/27823
- US-A1- 2002 182 497
- PATENT ABSTRACTS OF JAPAN vol. 2002, no. 05, 3 May 2002 (2002-05-03) & JP 2002 015735 A (TOYOTA CENTRAL RES & DEV LAB INC), 18 January 2002 (2002-01-18)
- GARCIA-MORENO O ET AL: "INFLUENCE OF THE STRUCTURE ON THE ELECTROCHEMICAL PERFORMANCE OF LITHIUM TRANSITION METAL PHOSPHATES AS CATHODIC MATERIALS IN RECHARGEABLE LITHIUM BATTERIES: A NEW HIGH-PRESSURE FORM OF LIMPO4 (M = FE AND NI)" CHEMISTRY OF MATERIALS, AMERICAN CHEMICAL SOCIETY, WASHINGTON, US, vol. 13, no. 5, May 2001 (2001-05), pages 1570-1576, XP001086741 ISSN: 0897-4756
- YAMADA A ET AL: "Optimized LiFePO4 for lithium battery cathodes" JOURNAL OF THE ELECTROCHEMICAL SOCIETY, ELECTROCHEMICAL SOCIETY. MANCHESTER, NEW HAMPSHIRE, US, vol. 148, no. 3, 2001, pages A224-A229, XP002235418 ISSN: 0013-4651 cited in the application
- PATENT ABSTRACTS OF JAPAN vol. 2003, no. 11, 5 November 2003 (2003-11-05) & JP 2003 217584 A (SEIMI CHEM CO LTD), 31 July 2003 (2003-07-31)
- FRANGER S ET AL: "Comparison between different LiFePO4 synthesis routes and their influence on its physico-chemical properties" JOURNAL OF POWER SOURCES, ELSEVIER SEQUOIA S.A. LAUSANNE, CH, vol. 119-121, 1 June 2003 (2003-06-01), pages 252-257, XP004430176 ISSN: 0378-7753

## Description

The present invention relates generally to a method of producing a material that can be used as active material in the cathodes of lithium cells.

The invention relates essentially to the preparation of materials with formula LiFePO₄, by reaction at the solid state between an organic phosphonate of Fe and a lithium salt. The materials according to the present invention are particularly suitable for the production of electrochemical accumulators with high power.

Lithium iron phosphate with a structure of the olivine type is being developed as cathode for lithium ion cells. The first report about the electrochemical properties of such material is due to Padhi [1] who demonstrated that lithium can be recycled into the material. Unfortunately, the process of insertion/extraction of lithium, even at a very low specific current (2mA/g), was limited to 0.6 equivalents of Li per mole (which corresponds to a 60% utilisation).

Ravet et al. [2] renew their interest in such material and disclosed a new synthetic way leading to a material which is an electron conductor by the presence of carbon in its structure. Such material had better charge/discharge characteristics. The full utilisation of the material was declared by a cycled cell at 80°C, even at high discharge rate.

Andersson et al. [3] performed the electrochemical removal of lithium from lithium iron phosphate and found that lithium remains in 20-25% of the material during the first charge cycle. However, this is not a inherent property of the material because this proportion decreases as the temperature increases. They inferred that the proportion of lithium-charged material can decrease by a careful control of the crystal size (granulometry) or the morphologic surface properties.

Similar results were found by Prosini et al. [4] who synthesised lithium iron phosphate in the presence of carbon with large surface area. Analysis by scanning electron microscope (SEM) confirmed that the addition of carbon reduces the size of the crystal grains. Electrochemical tests have shown instead that the synthesised material in the presence of 10% carbon shows a better efficiency.

In a following work Prosini et al. [5] determined the diffusion coefficient of lithium into the material. The value was in the range 1.8x10⁻¹⁴ to 2.2x10⁻¹⁶ m²/s. These values are very low with respect to the diffusion coefficient of other materials used as cathodes in lithium ion cells. This work seems to demonstrate that the low efficiency of lithium iron phosphate at room temperature has to be related to a low diffusion of lithium into the material.

On the other hand, it should be appreciated that lithium iron phosphate is a material with mixed ion/electron conduction. The electron conductivity of lithium iron phosphate is related to the electron gap of the electrons of the transition metal at valence II to valence III. If transfer of lithium ion is much faster than that of the electrons, the diffusion coefficient of lithium depends on the diffusion coefficient of the electrons.

Nevertheless the reduction in the crystal size and then the reduction in the diffusion path both for ions and electrons is one way to increase the use of the material also at room temperature. This had also been proposed by Goodenough who suggested that the use in lithium iron phosphate samples with a smaller crystal size [6] could increase.

In fact Nazar et al. have been able to prepare a lithium iron phosphate/carbon composition that shows up to 90% of the theoretical capacity. This result has been achieved through the combination of a very accurate mixing of a graphite composition and a check of the crystal grain size with nanometric dimension. Both conditions must be fulfilled to optimise the electrochemical efficiency.

Croce et al. followed the same way [8] and mixed micrometric copper or silver powder to the precursors before the crystal phase was formed. They found that the metal powder could act as enucleation site for the growth of micrometric material particles and, at the same time, determined an increase in the electron conductivity of the lithium iron phosphate/metal composition.

Moreover, NTT and SONY [9, 10] studied the effect of the synthesis temperature to the material efficiency. Both found that the reduction in the temperature causes the crystal size to decrease and the electrochemical properties to increase.

To sum up, the results of the literature clearly show that the process limiting the electrochemical properties of lithium iron phosphate is a combination of a low diffusion of lithium ions and a low electron conductivity, and that a material characterised by a reduced crystal (micrometric or nanometric) size and a good electron contact with the conductive filler is necessary to provide a material that can be advantageously used as cathode in lithium cells.

In WO-A- 02/27 823, it is disclosed a method for the production of a crystal material with the formula LiMPO4 by the solid state reaction of an inorganic phosphate and Li2CO3. The mixture is then pyrolised and a crystal material is obtained

From US -A-2002/182 it is known a method for the production of LiMPO4 in which the C-source consists of carbonaceous fine particles.

JP-A-2002 015735 discloses a manufacturing method for the production of LiMPO4 without the presence of a carbon source.

From Chem.Mater. 13,1570 (2001) and J:Electreochem.Soc. 148, A224 (2001) it is disclosed a method which also starts from the solid state re-action of L12CO3 with an ammonium phosphate and a M-source.

The main object of the present invention is to produce a cathode material that is provided with the above-mentioned characteristics to achieve high electrochemical properties.

According to the present invention it is disclosed a method for the production of a crystal material already containing carbon without the latter should be added thereafter as claimed in claim 1, which method provides the steps of grinding and mixing at the solid state an organic phosphonate of Fe with a lithium salt and causing them to react together by pyrolysis at the solid state and high temperature by one or more heating cycles.

A better understanding of the present invention will follow from the following detailed description with reference to the accompanying drawings.

In the drawings:
Figure 1 is a diagram of the thermal analysis of the starting mixture under inert environment;
Figure 2 is a diagram showing the experimental X-ray diffraction spectrum (+), the (-) calculated spectrum, and the differential spectrum, all of them relative to the sample called EMB62;
Figures 3 and 4 are SEM images relative to sample EMB62 that show the granulometry and the presence of two phases, respectively;
Figure 5 is a diagram showing the thermal analysis of the reagent mixture made in inert environment;
Figure 6 is a diagram of the experimental X-ray diffraction spectrum (+), the (-) calculated spectrum, and the differential spectrum, all of them relative to the sample called EMB69;
Figures 7 and 8 are diagrams of potentials for EMB62 and EMB69, respectively;
Figures 9 and 10 are diagrams of the specific capacity versus the number of cycles for EMB62 and EMB69, respectively; and
Figures 11 and 12 are diagrams of the "Ragone's Plot" for EMB62 and EMB69, respectively.

The present invention seeks to provide the preparation by synthetic way of controlled crystal size material containing carbon to give the desired electron conductivity to the particles of the material.

According to peculiar feature of the invention, carbon forms inside the material during its formation directly to the surface of the lithium iron phosphate particles, interacting with the latter and ensuring an optimum electron drain. In contrast with other known synthesis methods that generally require a first passage to decompose the precursors followed by a cooling of the material, re-mixing and possible addition of carbon, followed by a second passage of crystallisation at high temperature, the method disclosed produces the crystal material containing carbon in one process.

In short, as defined in the appended claims, the synthesis of crystals of lithium iron phosphate with micrometric granulometry containing intrinsically carbon is provided. The method is based upon the reaction at high temperature of an alkyl or aryl iron (II) phosphonate with lithium carbonate. Iron (II) phosphonate has the following advantages as starting material:
A. It provides at the same time phosphorus, iron and carbon in the degradation and reaction with Li₂CO₃;
B. It does not produce any impurity during the preparation of the homogeneous mixture with the other reagents as it is stable in air.

According to the invention, phosphonate transforms into phosphate during the reaction, and the alkyl or aryl group oxidizes partially to elementary carbon which is advantageously trapped in the structure of the material. The role of carbon has a dual importance. On one hand, it is necessary to give electron conductivity to the material which is a strong insulator and, on the other hand, controls the crystal growth limiting it to micrometric dimensions. According to the invention, composite cathodes can be made with such material having for example the following weight percent composition:
I. new cathode material: about 75%;
II. a polymer as binder: about 10%;
III. carbon to increase the electron conductivity of the electrode: about 15%.

The electrochemical characterisation of the material provided by the method disclosed above was made on discs with 10 mm diameter which were cut from a thin sheet obtained by mixing the powders in a mortar and calendering them on two steel rolls. In particular, such characterisation was carried out in cells with non-aqueous electrolyte (ethylene carbonate/di-ethyl-carbonate 1:1 LiPF₆ 1M). A lithium disc was used as anode and reference electrode, and fibreglass sheets were used as separators.

From the foregoing, the preparation of LiFePO₄ by pyrolysis of alkyl and aryl phosphonates is made by the following reaction: 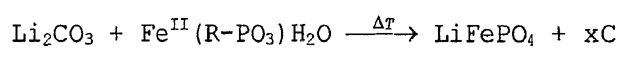
R = CₙH₂ₙ₊₁ where n = 1, 2, ..., 18.
R = C₆H₅(CH₂)ₙ where n = 0, 1, 2, 3.

The decomposition treatment has decomposition time and temperature of the reagents depending on the type of substituent R in phosphonate. More specifically, the temperature has to be not lower than the decomposition temperature of phosphonate (∼500°C) and not higher than the sintering temperature of the final product (∼800C).

Of course, the reaction time depends on the temperature. According to the invention, the decomposition can be carried out in only one step by direct heating to an intermediate temperature between those mentioned above by a time of 32 hours, or in two or more steps for different times and temperatures (for example: a first treatment at 600°C for 16 hours, and a second at 800°C for 16 hours).

Two typical preparations from an alkyl phosphonate (A) and an aryl phosphonate (B) are shown below.

### A) Preparation of Li_{1.0}FePO₄ from Fe(II)methyl phosphonate:

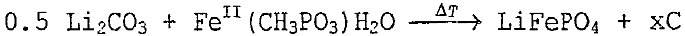

The composition has been identified with the symbol EMB62.

Equipment used in the experiments:
1. Mechanical mixer "Retsch" model S1000
2. 50 ml container of agate equipped with No. 5 balls of agate (Ø=10 mm)
3. Quartz tube
4. Tubular oven
5. Alumina nacelle

List and amounts of the product used in the experiments:
Li₂CO₃: Aldrich, > 99% 0.44 g (11.91 mmoles Li)
Fe^{II}(CH₃PO₃)H₂O: 2.00 g (11.91 mmoles)

According to the method disclosed, the two reagents are placed in a jar of agate together with five balls of agate (Ø 10 mm) and ground in a mill for about two hours. The mixture obtained is poured into an alumina nacelle which is placed at the centre of a quartz tube located in a tubular oven. After the closure of the quartz tube, the reaction apparatus is washed by nitrogen gas. The reaction mixture is treated for sixteen hours at 600°C under a light flow of inert gas. After cooling, the grey coloured powder in the nacelle is subjected to a new thermal treatment for sixteen hours at 800°C, still under a light flow of inert gas.

By the above-mentioned amounts given by way of a not limiting example, 1.77 g LiFePO₄ (11.22 moles calculated for LiFePO₄ corresponding to about 90% yield calculated from the amount of Fe(II)methyl phosphonate, symbol EMB62) is obtained at the end of the thermal treatment.

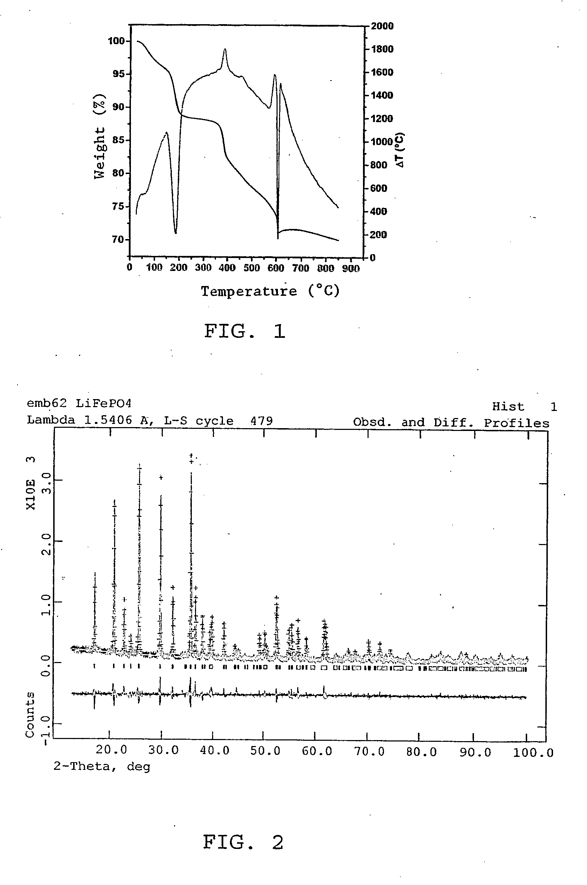

The thermal analysis of the starting mixture in inert environment is shown in Figure 1.

The X-ray diffraction spectrum is shown in Figure 2 also illustrating the spectrum calculated and the "differential" spectrum obtained by Rietveld's analysis.

The results of the crystallographic study are:
Crystal system: Orthorhombic
Spatial group: Pnma
Cell constants:
   *a=10.33(1)Å b=6.01(1)Å c=4.69(1)Å;*
   *α=90.0° β=90.0° γ=90.0°.*

### Atom positions in the crystallographic cell:

| | x | y | z |
|---|---|---|---|
| Li | 0.0000000 | 0.0000000 | 0.0000000 |
| Fe | 0.7824900 | 0.2500000 | 0.5254090 |
| P | 0.5944420 | 0.2500000 | 0.0809760 |
| O1 | 0.5942160 | 0.2500000 | 0.7568890 |
| O2 | 0.9574330 | 0.2500000 | 0.2884310 |
| O3 | 0.1624660 | 0.0500630 | 0.2837160 |

### Matching factors:

*R_{wp}=11.36%; Rₚ=8.99%; R_{Bragg}=7.82%; χ²=2.118*

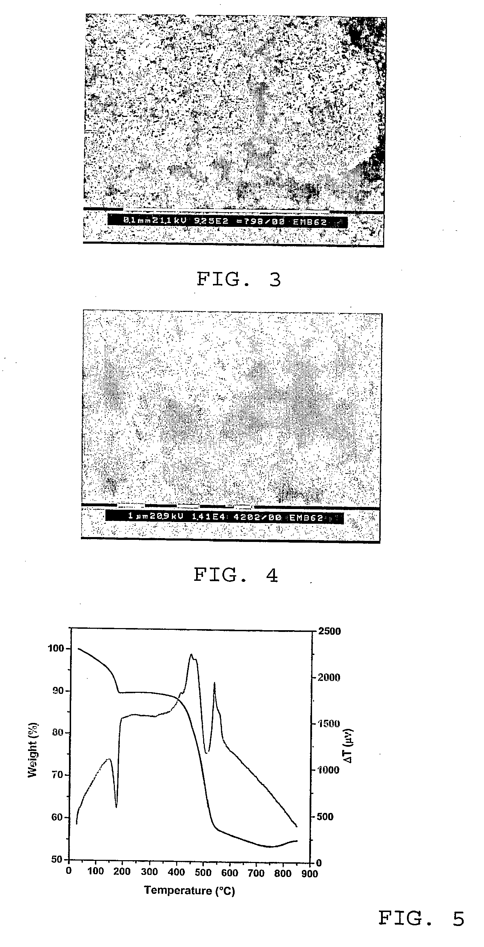

A SEM analysis was made to determine the particle size. The SEM powder analysis provided two data:
- a granulometry of about 1 µm (see Figure 3)
- the presence of two phases (see Figure 4): the first is characterized by small balls, and the second consists of larger, less regular clots.

This indicates the presence of carbon in the solid. An elementary analysis in fact detects the presence of a quantitative proportion of 2.56% C and 0.04% H. The content of C in the starting composition is 7.15% and that of H is 3.02%.

### B) Preparation of Li_{1.0}FePO₄ from Fe (II) phenyl phosphonate:

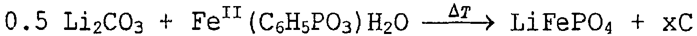

The composition was identified with the symbol EMB69.

The equipment used in the experiments are the same as those disclosed previously in item A).

List and amounts of the products used in the experiments:

| | |
|---|---|
| Li₂CO₃: | Aldrich, >99% 0.34657 g (9.38 mmoles Li) |
| Fe^{II}(C₆H₅PO₃)H₂O: | identified by 2.15780 g (9.38 mmoles) the symbol B313 and stored in phial under vacuum |

According to the method disclosed the two reagents of this second embodiment are mixed in a jar of agate containing five balls of agate (Ø 10 mm) and ground in a mill for about one hour. The light brown mixture obtained is poured into an alumina nacelle which is placed at the centre of a quartz tube inside a tubular oven. After the closure of the quartz tube, the whole is washed by nitrogen gas for about one hour. The output of gas from the quartz tube is connected to an empty flask with scrubber, followed by another filling with silicone oil to avoid any windage. The thermal gravimetry carried out only on Fe(II)phenyl phosphonate shows a decomposition of the material at temperature higher than 580°C. The above-mentioned reaction mixture is subjected for twenty hours to a treatment at 700°C under a light flow of inert gas.

At the end of the thermal treatment a deep grey coloured powder is obtained.

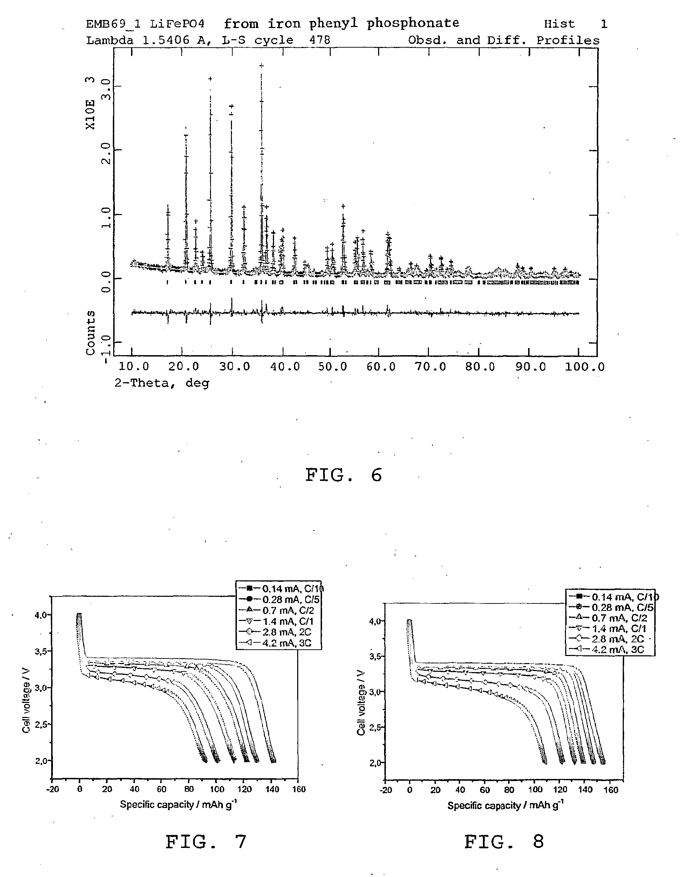

The thermal analysis of the reagent mixture carried out in inert environment is shown in Figure 5. The X-ray diffraction spectrum was recorded and studied by Rietveld's analysis (see Figure 6).

The crystallographic study of the powder gave the following results:
Crystal system: Orthorhombic
Spatial group: Pnma
Cross-linking constants:
   *a=10.33(1)Å b=6.01(1)Å c=4.69(1)Å;*
   *α=90.0° β=90.0° γ=90.0°,*

### Atom positions in the crystallographic cell:

| | x | y | z |
|---|---|---|---|
| Li | 0.0000 | 0.0000 | 0.0000 |
| Fe | 0.28230 | 0.2500 | 0.9730 |
| P | 0.09564 | 0.2500 | 0.4225 |
| O1 | 0.0916 | 0.2500 | 0.7440 |
| O2 | 0.4560 | 0.2500 | 0.2133 |
| O3 | 0.1589 | 0.0520 | 0.2825 |

### Matching factors:

*R_{wp}=11.50%; Rₚ=8.89%; R_{Bragg}=9.62%; χ²=1.875*

Cathode composites with the following composition were prepared for the electrochemical characterisation:

| | | | |
|---|---|---|---|
| EMB-62 | 169.7 mg | EMB-69 | 88.8 mg |
| Carbon KJB | 29.9 mg | Carbon KJB | 11.1 mg |
| Teflon | 18.7 mg | Teflon | 11.1 mg |
| TOTAL | 218.3 mg | TOTAL | 111.0 mg |

Carbon was added to increase the electron conductivity of the electrode, thus ensuring a better drain of electrons, especially at high current density.

EMB-62 material includes about 2.5% carbon, then the amount of LiFePO₄ is equal to 165.45 mg, and the carbon contained therein is equal to 4.25 mg. Therefore, the total composition of the composite is:

| | |
|---|---|
| LiFePO₄ | 165.45 mg = 75.8% |
| Carbon | 34.15 mg = 15.6% |
| Teflon | 18.70 mg = 8.6% |

The mixture was laminated between steel rolls and transformed into a film from which a disc with 10 mm diameter was cut. The weight of the disc was 11.2 mg corresponding to a weight of active material equal to 8.49 mg. The theoretical capacity of the electrode is 1.44 mAh.

EMB-69 material includes about 5% carbon, then the amount of LiFePO₄ is equal to 84.36 mg, and the carbon contained therein is equal to 4.4 mg. Therefore, the total composition of the composite is:

| | |
|---|---|
| LiFePO₄ | 84.36 mg = 76.0% |
| Carbon | 15.54 mg = 14.0% |
| Teflon | 11.10 mg = 10.0% |

The mixture was laminated between steel rolls and transformed into a film from which a disc with 10 mm diameter was cut. The weight of the disc was 10.8 mg corresponding to a weight of active material equal to 8.208 mg. The theoretical capacity of the electrode is 1.395 mAh.

Two electrochemical cells were prepared and cycled according to the following schema:
Galvanostatic charge at 1.4 mA (C rate) until 4 V, followed by a static potential charge at 4 V until the current was not lower than 0.14 mA (C/10).
Galvanostatic discharges at 0.14, 0.28, 0.7, 1.4, 2.8, and 5.4 mA corresponding to discharge rates of C/10, C/5, C/2, C, 2C, and 3C.

Figures 7 and 8 show the potential diagrams of the two cells versus the specific capacity.

EMB-62 material discharges about 140 mAh g⁻¹ at C/10 with a constant potential of 3.38 V, and EMB-69 material has a slightly greater specific capacity. Capacity and work potential reduce as the discharge rate increases.

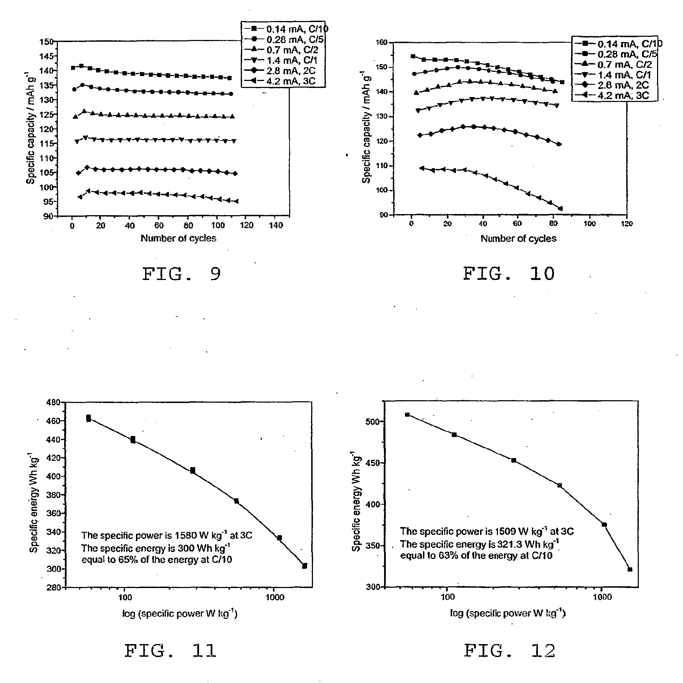

Figures 9 and 10 show the discharged capacity versus the number of cycles at different discharge rates. EMB-62 material has a better retention as the charge/discharge cycles proceed.

At last, the Ragone's plot is shown for the two cells regarding the first discharge cycles. It should be noted that the two materials have very similar performances as they provide a specific energy greater than 300 Wh*kg⁻¹ at a power beyond 1500 W*kg⁻¹.

As already mentioned above, the material obtained by the method according to the invention is particularly suitable for the production of electrochemical accumulators. In particular, such material having formula LiFePO₄ can be used for cathodes including such material as active material, an electron conductor, and a polymer binder.

The present invention has been described and illustrated according to two preferred embodiments thereof, however, it is self-evident that those skilled in the art can make modifications and/or variations without departing from the scope of the present industrial invention.

### BIBLIOGRAPHY

1. A.K. Padhi, K.S. Nanjundaswamy and J.B. Goodenough, *J. Electrochem. Soc*., **144**, 1188 (1997).
2. N. Ravet, J.B. Goodenough, S. Besner, M. Simoneau, Meeting, Hawaii, October 17-22, (1999).
3. A.S. Andersson, B. Kalska, L. Häggström and J.O. Thomas, Solid State Ionics, 130, 41 (2000).
4. P.P. Prosini, D. Zane and M. Pasquali, Electrochim. Acta, 46, 3517 (2001).
5. P.P. Prosimi, M. Lisi, D. Zane and M. Pasquali, Solid State Ionics, 148, 45 (2002).
6. J.B. Goodenough and V. Manivannam, Denki Kagaku, 66, 1173 (1998).
7. H. Huang, S.C. Yin and F. Nazar, Electrochemical and Solid State Letters, 4 A170 (2001).
8. F. Croce, A. D'Epifanio, J. Hassoun, A. Deptula, T. Olczac and B. Scrosati, Electrochemical and Solid State Letters, 5 A47 (2002).
9. M. Takahashi, S. Tohishima, K. Takei and Y. Sakurai, Journal of Power Sources, 97, 508 (2001)
10. Yamada, S.C. Chung and K. Hinokuma, J. Electrochem. Soc., 148, A224 (2001).
11. Sung-Yoon Chung, Jason T. Bloking and Yet-Ming Chiang, Nature Materials /Voll/October 2002/.

## Claims

1. A method of producing a crystal material with formula LiFePO₄, **characterized in that** it provides the steps of grinding and mixing at the solid state an organic phosphonate of Fe with a lithium salt and causing them to react together by pyrolysis at the solid state and high temperature by one or more heating cycles, thus obtaining a micrometric size crystal material already containing carbon without the latter should be added thereafter.

2. The method according to the preceding claim, **characterized in that** carbon forms inside the material during its pyrolysis directly to the surface of the lithium iron phosphate particles, interacting with the latter and ensuring an optimum electron drain.

3. The method according to claim 1 or 2, **characterized in that** the preparation of LiFePO₄ by pyrolysis of alkyl and aryl phosphonates is made by the following reaction: 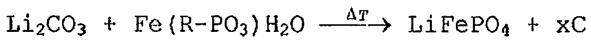
R CₙH₂ₙ₊₁ where n = 1, 2, ..., 18.
R = C₆H₅(CH₂)ₙ where n = 0, 1, 2, 3.

4. The method according to the preceding claim, **characterized in that** as starting material an alkyl or aryl iron (II) phosphonate and a lithium carbonate is (Li₂CO₃) provided, thus achieving that phosphonate provides at the same time phosphorus, iron and carbon in the degradation and reaction with Li₂CO₃, and that phosphonate does not produce any impurity during the preparation of the homogeneous mixture with the other reagents as it is stable in air.

5. The method according to claim 1, **characterized in that** phosphonate transforms into phosphate during the reaction, and the alkyl group oxidizes partially to elementary carbon which remains advantageously trapped in the structure of the material, said carbon being necessary both to give electron conductivity to the material being a strong insulator and to control the crystal growth limiting it to micrometric dimensions.

6. The method according to claim 3 or 4, **characterized in that** the pyrolysis treatment has decomposition time and temperature of the reagents depending on the type of substituent "R" in phosphonate, the temperature being not lower than the decomposition temperature of phosphonate and not higher than the sintering temperature of the final product.

7. The method according to claim 1, **characterized in that** the decomposition by pyrolysis is carried out in only one step by direct heating to a temperature between 600 and 800°C for a time of 32 hours

8. The method according to claim 1, **characterized in that** the decomposition by pyrolysis is carried out in two or more steps at different temperatures and times.

9. The method according to the preceding claim, **characterized in that** the decomposition by pyrolysis is carried out by a first treatment at 600°C for 16 hours, and a second one at 800°C for 16 hours.

10. The method according to claim 3, **characterized in that** the preparation of Li_{1.0}FePO₄ from Fe(II)methyl phosphonate with the following reaction: 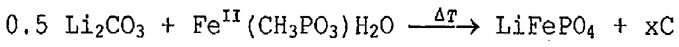 requires the following operating steps:
a) mixing the two reagents in a jar of agate together with some balls of agate (Ø=10 mm);
b) grinding said reagents by a mill for about two hours;
c) pouring the mixture thus prepared into an alumina nacelle;
d) placing said nacelle at the centre of a quartz tube located in a tubular oven;
e) closing the quartz tube and washing the reaction apparatus by nitrogen gas;
f) treating said reaction mixture for sixteen hours at 600°C under a light flow of inert gas;
g) subjecting, after cooling, the treated material to a new thermal treatment for sixteen hours at 800°C, still under a light flow of inert gas.

11. The method according to the preceding claim, **characterized in that** the powder obtained has a granulometry of about 1 µm and has two phases: the first is **characterized by** small balls, and the second consists of larger, less regular clots.

12. The method according to the preceding claim, **characterized in that** a powder having a content of 2.56% C and 0.04% H is obtained from a starting composition having a quantitative proportion of 7.15% C and 3.02% H.

13. The method according to claim 3, **characterized in that** for the preparation of Li_{1.0}FePO₄ from Fe(II)phenyl phosphonate by the following reaction: 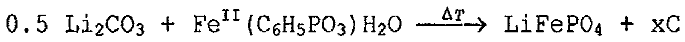 the following steps are provided:
a) mixing the two reagents in a jar of agate together with some balls of agate (Ø=10 mm);
b) grinding said reagents by a mill for about one hour;
c) pouring the light brown mixture thus prepared into an alumina nacelle;
d) placing said nacelle at the centre of a quartz tube inside a tubular oven;
e) closing the quartz tube and washing the reaction apparatus by nitrogen gas for about one hour, connecting the gas output from the quartz tube to an empty flask with scrubber, followed by another filling with silicone oil to avoid any windage.
f) subjecting said reaction mixture for twenty hours to a treatment at 700°C under a light flow of inert gas.

## Patentansprüche

1. Verfahren zur Herstellung eines kristallinen Materials mit der Formel LiFePO₄, **dadurch gekennzeichnet, dass** es die Schritte des Mahlens und Mischens von - jeweils im festen Zustand befindlichen - organischem Phosphonat von Fe mit einem Lithiumsalz und das Hervorrufen einer Reaktion der beiden mittels Pyrolyse im festen Zustand und bei einer hohen Temperatur in einem oder mehreren Wärmezyklen vorsieht, so dass ein mikrometergroßes, kristallines Material erhalten wird, welches bereits Kohlenstoff enthält, ohne dass dieser in einem nachfolgenden Schritt zugesetzt werden müsste.

2. Verfahren nach dem vorangegangenen Anspruch, **dadurch gekennzeichnet, dass** sich der Kohlenstoff während der Pyrolyse im Inneren des Materials direkt zur Oberfläche der Lithiumeisenphosphat-Teilchen hin bildet, mit diesen wechselwirkt und einen optimalen Abfluss von Elektronen sicherstellt.

3. Verfahren nach Anspruch 1 oder 2, **dadurch gekennzeichnet, dass** die Erzeugung von LiFePO₄ mittels einer Pyrolyse von Alkyl- und Arylphosphonaten über die folgende Reaktion erfolgt: 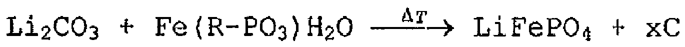
R = CₙH₂ₙ₊₁, wobei n = 1, 2, ..., 18 ist,
R = C₆H₅(CH₂)ₙ, wobei n = 0, 1, 2, 3 ist.

4. Verfahren nach dem vorangegangenen Anspruch, **dadurch gekennzeichnet, dass** als Ausgangsmaterial ein Alkyl- oder Aryleisen (II)-phosphonat und ein Lithiumcarbonat (Li₂CO₃) eingesetzt werden, wodurch erreicht wird, dass das Phosphonat durch die Zersetzung und die Reaktion mit dem Li₂CO₃ gleichzeitig Phosphor, Eisen und Kohlenstoff bereitstellt und dass das Phosphonat während der Erzeugung einer homogenen Mischung mit den anderen Reagenzien keinerlei Verunreinigungen bildet, da es in der Luft stabil ist.

5. Verfahren nach Anspruch 1, **dadurch gekennzeichnet, dass** das Phosphonat während der Reaktion zu Phosphat wird und die Alkylgruppe teilweise zu elementarem Kohlenstoff oxidiert wird, der vorteilhaft in der Struktur des Materials eingeschlossen bleibt, wobei der Kohlenstoff sowohl dazu erforderlich ist, dem Material eine Elektronenleitfähigkeit zu verleihen, weil er ein starker Isolator ist, und ebenso dazu beiträgt, das Wachstum der Kristalle im Mikrometerbereich zu halten.

6. Verfahren nach Anspruch 3 oder 4, **dadurch gekennzeichnet, dass** die Dauer und die Temperatur der Zersetzung der Reagenzien während der Pyrolysebehandlung von der Art des Substituenten "R" im Phosphonat abhängen, wobei die Temperatur nicht kleiner als die Zersetzungstemperatur des Phosphonats und nicht höher als die Sintertemperatur des Endprodukts ist.

7. Verfahren nach Anspruch 1, **dadurch gekennzeichnet, dass** die Zersetzung mittels Pyrolyse in nur einem Schritt erfolgt, bei dem für eine Dauer von 32 Stunden direkt auf eine Temperatur zwischen 600 und 800 °C erwärmt wird.

8. Verfahren nach Anspruch 1, **dadurch gekennzeichnet, dass** die Zersetzung mittels Pyrolyse in zwei oder mehr Schritten mit verschiedenen Temperaturen und über verschieden lange Zeiträume erfolgt.

9. Verfahren nach dem vorangegangenen Anspruch, **dadurch gekennzeichnet, dass** die Zersetzung mittels Pyrolyse in einer ersten Behandlung bei 600 °C und für eine Dauer von 16 Stunden und einer zweiten Behandlung bei 800 °C und für eine Dauer von 16 Stunden erfolgt.

10. Verfahren nach Anspruch 3, **dadurch gekennzeichnet, dass** die Herstellung von Li_{1,0}FePO₄ aus Fe (II)-methylphosphonat über die folgende Reaktion: 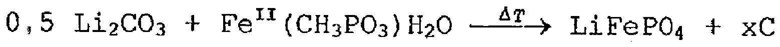 die folgenden Arbeitsschritte erfordert:
a) Mischen der beiden Reagenzien in einem Achatgefäß zusammen mit einigen Achatkügelchen (Ø=10 mm);
b) Mahlen der Reagenzien mit einer Mühle für etwa 2 Stunden;
c) Gießen der so vorbereiteten Mischung in eine Gondel aus Aluminiumoxid;
d) Anordnen der Gondel in der Mittel einer Quarzröhre, die in einem Röhrenofen angeordnet ist;
e) Schließen der Quarzröhre und Waschen der Reaktionsvorrichtung mit Stickstoffgas;
f) Behandeln der Reaktionsmischung für sechzehn Stunden bei 600 °C unter einem leichten Inertgasstrom;
g) Unterziehen des behandelten Materials - nach dem Abkühlen - einer neuen Wärmebehandlung für sechzehn Stunden bei 800 °C, weiterhin unter einem leichten Inertgasstrom.

11. Verfahren nach dem vorangegangenen Anspruch, **dadurch gekennzeichnet, dass** das erhaltene Pulver eine Granulometrie oder Korngröße von etwa 1 µm besitzt und zwei Phasen aufweist: die erste Phase ist durch kleine Kügelchen gekennzeichnet und die zweite Phase besteht aus größeren, weniger gleichmäßig geformten Klümpchen.

12. Verfahren nach dem vorangegangenen Anspruch, **dadurch gekennzeichnet, dass** aus einer Ausgangszusammensetzung mit einem Mengenanteil von 7,15 % C und 3,02 % H ein Pulver mit einem Anteil von 2,56 % C und 0,04 % H erhalten wird.

13. Verfahren nach Anspruch 3, **dadurch gekennzeichnet, dass** für die Herstellung von Li_{1,0}FePO₄ aus Fe (II)-phenylphosphonat über die folgende Reaktion: 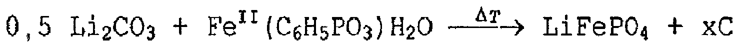 die folgenden Schritte vorgesehen sind:
a) Mischen der beiden Reagenzien in einem Achatgefäß zusammen mit einigen Achatkügelchen (Ø=10 mm);
b) Mahlen der Reagenzien mit einer Mühle für etwa eine Stunde;
c) Gießen der so vorbereiteten, hellbraunen Mischung in eine Gondel aus Aluminiumoxid;
d) Anordnen der Gondel in der Mittel einer Quarzröhre im Inneren eines Röhrenofens;
e) Schließen der Quarzröhre und Waschen der Reaktionsvorrichtung mit Stickstoffgas für etwa eine Stunde, Verbinden des Gasauslasses der Quarzröhre mit einem leeren Behälter mit einer Gaswascheinrichtung, der eine weitere Füllung mit Silikonöl folgt, um Verwirbelungen jeglicher Art zu vermeiden;
f) Unterziehen der Reaktionsmischung für zwanzig Stunden einer Behandlung bei 700 °C unter einem leichten Inertgasstrom.

## Revendications

1. Procédé de production d'un matériau cristallin avec une formule LiFePO₄, **caractérisé en ce qu'**il comporte les étapes de broyage et mélange à l'état solide d'un phosphonate organique de Fe avec un sel de lithium et les faire réagir ensemble par pyrolyse à l'état solide et à haute température par un ou plusieurs cycles de chauffage, en obtenant ainsi un matériau cristallin de taille micrométrique contenant déjà du carbone sans que ce dernier doive être ajouté successivement.

2. Procédé selon la revendication précédente, **caractérisé en ce que** du carbone se forme à l'intérieur du matériau durant sa pyrolyse directement sur la surface des particules de phosphate de fer-lithium, en interagissant avec ces dernières et en garantissant un drain d'électrons optimal.

3. Procédé selon la revendication 1 ou 2, **caractérisé en ce que** la préparation de LiFePO₄ par pyrolyse de phosphonates alkyle et aryle est effectuée par la réaction suivante : 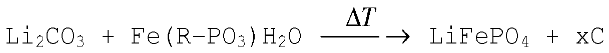
R = CₙH₂ₙ₊₁ ou n = 1, 2, ..., 18.
R = C₆H₅(CH₂)ₙ où n = 0, 1, 2, 3.

4. Procédé selon la revendication précédente, **caractérisé en ce qu'**un phosphonate de fer (II) alkyle ou aryle et un carbonate de lithium (Li₂CO₃) sont prévus comme matériau de départ, en obtenant ainsi que le phosphonate fournisse en même temps du phosphore, du fer et du carbone dans la dégradation et la réaction avec Li₂CO₃, et que le phosphonate ne produise aucune impureté durant la préparation du mélange homogène avec les autres réactifs car il est stable dans l'air.

5. Procédé selon la revendication 1, **caractérisé en ce que** le phosphonate se transforme en phosphate durant la réaction et le groupe alkyle s'oxyde partiellement en carbone élémentaire qui reste avantageusement piégé dans la structure du matériau, ledit carbone étant nécessaire à la fois pour donner une conductivité électronique au matériau qui est un fort isolant et pour contrôler la croissance des cristaux en la limitant à des dimensions micrométriques.

6. Procédé selon la revendication 3 ou 4, **caractérisé en ce que** le traitement de pyrolyse a un temps et une température de décomposition des réactifs dépendant du type de substituant "R" dans le phosphonate, la température étant non inférieure à la température de décomposition du phosphonate et non supérieure à la température de frittage du produit final.

7. Procédé selon la revendication 1, **caractérisé en ce que** la décomposition par pyrolyse est exécutée en seulement une étape par chauffage direct à une température entre 600 et 800°C pendant un temps de 32 heures.

8. Procédé selon la revendication 1, **caractérisé en ce que** la décomposition par pyrolyse est exécutée en au moins deux étapes avec des températures et des temps différents.

9. Procédé selon la revendication précédente, **caractérisé en ce que** la décomposition par pyrolyse est exécutée par un premier traitement à 600°C pendant 16 heures et un deuxième à 800°C pendant 16 heures.

10. Procédé selon la revendication 3, **caractérisé en ce que** la préparation de Li_{1.0}FePO₄ à partir de phosphonate Fe(II)méthyle avec la réaction suivante 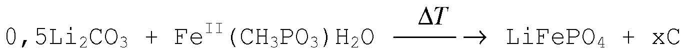 requiert les étapes fonctionnelles suivantes :
a) le mélange des deux réactifs dans un pot en agate conjointement à quelques billes d'agate (Ø=10 mm) ;
b) le broyage desdits réactifs avec un moulin pendant environ deux heures ;
c) le versement du mélange ainsi préparé dans une nacelle d'alumine ;
d) le positionnement de ladite nacelle au centre d'un tube de quartz situé dans un four tubulaire ;
e) la fermeture du tube de quartz et le lavage du dispositif de réaction à l'azote ;
f) le traitement dudit mélange de réaction pendant seize heures à 600°C en présence d'un léger flux de gaz inerte ;
g) le fait de soumettre, après refroidissement, le matériau traité à un nouveau traitement thermique pendant seize heures à 800°C toujours en présence d'un léger flux de gaz inerte.

11. Procédé selon la revendication précédente, **caractérisé en ce que** la poudre obtenue a une granulométrie d'environ 1 µm et a deux phases : la première est **caractérisée par** de petites billes et la deuxième se compose de caillots plus grands et moins réguliers.

12. Procédé selon la revendication précédente, **caractérisé en ce qu'**une poudre ayant une teneur de 2,56% de C et 0,04% de H est obtenue à partir d'une composition de départ ayant une proportion quantitative de 7,15% de C et 3,02% de H.

13. Procédé selon la revendication 3, **caractérisé en ce que** pour la préparation de Li_{1.0}FePO₄ à partir de phosphonate Fe(II)méthyle avec la réaction suivante 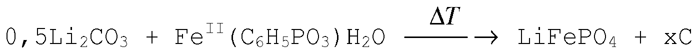 les étapes suivantes sont prévues :
a) le mélange des deux réactifs dans un pot en agate conjointement à quelques billes d'agate (Ø=10 mm) ;
b) le broyage desdits réactifs avec un moulin pendant environ une heure ;
c) le versement du mélange marron clair ainsi préparé dans une nacelle d'alumine ;
d) le positionnement de ladite nacelle au centre d'un tube de quartz à l'intérieur d'un four tubulaire ;
e) la fermeture du tube de quartz et le lavage du dispositif de réaction à l'azote pendant environ une heure, la connexion de la sortie de gaz provenant du tube de quartz à un flacon vide avec épurateur, suivi par un autre remplissage avec de l'huile de silicone pour éviter tout tourbillonnement ;
f) le fait de soumettre ledit mélange de réaction pendant vingt heures à un traitement à 700°C en présence d'un léger flux de gaz inerte.
